# EUROPEAN PATENT APPLICATION

(11) **EP 2 163 155 A1**
(43) Date of publication of application: **17.03.2010**
(21) Application number: 08388030.2
(22) Date of filing: 11.09.2008
(51) Int. Cl.: A01K 13/00

(54) **A method and apparatus for cleaning of hoofs and legs of cloven-hoofed animals**

(71) Applicant: Jensen, Asger Roed, 5462 Morud (DK)
(72) Inventor: Jensen, Asger Roed, 5462 Morud (DK)
(74) Representative: Nielsen, Henrik Sten

(57) **Abstract**

A method of cleaning a cloven-hoofed animal with a body defining a body length and a body width and with four legs constituting a pair of rear legs and a pair of front legs, where each leg has a hoof and a knee. The method comprises providing a cleaning station (10), which comprises an enclosure (12) located on a horizontal surface. The enclosure has an entrance gate (14) and an exit gate (16) and defines an interior length and an interior width corresponding to the body length and body width [of the cloven-hoofed animal], and the enclosure defines a height at least equal to the height of the leg. The method further comprises a set of pivotable nozzles (34) mounted on the enclosure, which are pivotable between a first position and a second position. The first position defines a nozzle direction towards the knee (60) and the second position defines a nozzle direction towards the hoof (62), and a fluid supply system for transporting a cleaning fluid from a cleaning fluid supply to the set of pivotable nozzles. The method including the steps of causing the cloven-hoofed animal to be positioned inside the enclosure and closing the entrance and exit gates to prevent any substantial movement of the cloven-hoofed animal *and* positioning the set of pivotable nozzles in the first position and propelling cleaning fluid against the knee and the leg of the cloven-hoofed animal by using the set of pivotable nozzles and fluid supply system *and* positioning the set of pivotable nozzles in the second position and propelling cleaning fluid against the hoof of the cloven-hoofed animal by using the set of pivotable nozzles and fluid supply system, *and* opening the exit gate and causing the cloven-hoofed animal to leave the enclosure.

## Description

The present invention relates to a method and a system for preventing diseases by cleaning the hoofs and the legs of cloven-hoofed animals.

Cloven-hoofed animals comprise a group of animals having a split hoof, such as goats, sheep, pigs and cattle. The split hoof comprises two toes having a hardened surface for contacting the ground and a cavity between the toes having a soft skin. The soft skin between the toes constitutes a sensitive part of the animal and any injury and/or infection between the toes may cause decreased mobility and serious health problems to the animal.

Domesticated cloven-hoofed animals, i.e. cattle, are often kept outdoors within a confined area typically known as a cattle yard. The cattle yard is typically located in an open area such as grassland to allow the cattle to be easily observed. By locating the cattle yard in a grassland, food such as grass and the like is readily available to the animals residing within the cattle yard. A barrier such as a fence typically encloses the cattle yard to keep the animals within the cattle yard.

Having a large amount of animals residing within the cattle yard will inevitably generate areas contaminated by debris such as mud, dirt and waste. In such areas several types of bacteria may thrive and pose a health hazard to the animals residing within the cattle yard. Cloven-hoofed animals, which are allowed to move freely within the cattle yard, will inevitably enter such areas. When the cloven-hoofed animal enters a contaminated area and steps into the debris, some debris may enter the cavity between the toes of the cloven-hoofed animal. Debris between the toes in combination with small injuries to the skin between the toes may lead to health problems and infections such as e.g. digital dermatitis. Digital dermatitis is hard to cure and may, in addition to reducing the mobility of the infected animal, significantly reduce the milk yield of the infected animal.

When the animal steps on the debris, loose debris may splash onto the lower part of the legs of the animal. Such loose debris may fall to the ground and the animal may step on it or it may remain on the leg of the animal for a period of time and later fall to the ground and thereby spread bacteria and debris to other parts of the cattle yard.

The increasing total amount of domesticated cloven-hoofed animals will lead to less space for each animal. Consequently a larger area of the cattle yard will be contaminated, and without sufficient cleaning of the hoofs of the animal, diseases may spread quickly within the cattle yard. There is therefore a growing need for technologies for cleaning the hoofs of cloven-hoofed animals to prevent the spread of diseases within the cattle yard.

Several technologies exist in the prior art related to the cleaning of the hoofs of cloven-hoofed animals. Some of the technologies in the prior art uses a liquid to remove debris from the hoofs of the cloven-hoofed animal and often at regular intervals, e.g. in connection with milking the animal. One such example is US 5,630,379, describing an electrically controlled spraying device for cleaning and treating animals where the animals are walked through a cleaning bath and the hoofs of the animal are cleaned by spray nozzles.

It has however been shown that the mere cleaning of the hoofs when passing by for milking is not enough to prevent diseases. Dirt and mud may stick to the hoofs and legs of the animal, and thus it may take some time to completely remove all debris. When only treating the hoofs, mud from the legs may drop to the ground and quickly contaminate the next passing animal, therefore also at least the lower leg of the animal must be cleaned to ensure an effective prevention of disease. It is thus an object according to the present invention to provide technologies for cleaning the hoofs and lower legs of cloven-hoofed animals.

When milking, the animal is typically lead into a milking booth located in close connection to the cattle yard. The area of the cattle yard close to the milking booth is therefore often littered with debris since animals are typically milked several times each day. Soon after cleaning the hoofs of the animal, the animal will return to the cattle yard and be exposed to contaminated ground. It is therefore a further object according to the present invention to provide technologies for preventing hoofs and legs of cloven-hoofed animals to be contaminated when the animal is residing within the cattle yard.

According to a first aspect of the present invention, the above need and the above objects together with numerous other needs and objects, which will be evident from the below detailed description, are obtained by a method of cleaning a cloven-hoofed animal, said cloven-hoofed animal having a body defining a body length and a body width, said cloven-hoofed animal having four legs constituting a pair of rear legs and a pair of front legs, each leg having a hoof and a knee, said method comprises providing a cleaning station, said cleaning station comprising:
an enclosure located on a horizontal surface, said enclosure having an entrance gate and an exit gate, said enclosure defining an interior length and an interior width corresponding to said body length and said body width, said enclosure defining a height at least equal to the height of said leg,
a set of pivotable nozzles mounted on said enclosure and being pivotable between a first position and a second position, said first position defining a nozzle direction towards said knee and said second position defining a nozzle direction towards said hoof, and
a fluid supply system for transporting a cleaning fluid from a cleaning fluid supply to said set of pivotable nozzles, said method including the steps of:
   causing said cloven-hoofed animal to be positioned inside said enclosure and closing said entrance and exit gates to prevent any substantial movement of said cloven-hoofed animal,
   positioning said set of pivotable nozzles in said first position and propelling cleaning fluid against said knee and said leg of said cloven-hoofed animal by using said set of pivotable nozzles and said fluid supply system,
   positioning said set of pivotable nozzles in said second position and propelling cleaning fluid against said hoof of said cloven-hoofed animal by using said set of pivotable nozzles and said fluid supply system, and
   opening said exit gate and causing said cloven-hoofed animal to leave said enclosure.

By providing an enclosure having a closable entrance and exit gate it can be ensured that the animal remains within the cleaning station for the duration of the cleaning. The enclosure should be designed to restrict any substantial movement of the animal, i.e. the animal should not be able to move its legs and hoofs outside the effective spray area of the pivotable nozzles. The enclosure also ensures that the animal is completely clean before allowing the animal to leave the cleaning station. It is further contemplated that each specific species of animal will require an enclosure having a specific size. The enclosure should provide enough room for the largest animal within the specific species to be able to stay within the enclosure without any discomfort to the animal. At the same time the enclosure should be small enough to limit the freedom of movement of the animal so that the hoofs of the animal remain substantially in the same location, i.e. within the effective spray area of the pivotable nozzles. The enclosure should also prevent the animal from turning around or otherwise change its orientation during cleaning. Enclosure should be understood to mean any barrier suitable for restricting the movement of the animal. The enclosure must not necessarily have a roof or any other upper barrier. The height of the enclosure should be high enough to prevent the animal from escaping the enclosure by stepping or jumping out of the enclosure. For jumping animals, such as goats, the enclosure may have to be designed slightly higher to ensure that the animal cannot escape from the enclosure. To prevent the animal inside the enclosure from being intimidated it may be desirable that at least part of the enclosure is lower than the head of the animal so that the animal may overlook the surroundings outside the enclosure. For safety reasons, it may be desirable to design the part of the enclosure facing the rear part of the animal slightly higher to prevent the animal within the enclosure from injuring persons or other animals by kicking rearwards. The cleaning process may possibly agitate some animals. The enclosure should therefore be made strong enough to protect the surroundings and prevent escape of an agitated animal.

The enclosure should be placed on a horizontal surface. The horizontal surface is preferably flat and solid and slightly elevated so that debris removed from the animal will not accumulate. The cleaning fluid and debris may be collected by an outlet in the enclosure, or alternatively the cleaning fluid and debris may be allowed to flow under the enclosure to the surroundings outside the enclosure.

The pivotable nozzles are preferably fed a high-pressurized cleaning fluid. The pivotable nozzles may preferably first rinse the legs of the animal by positioning the pivotable nozzles in the first position, i.e. directing the pivotable nozzles towards the leg and knee of the animal. When the leg and knee have been sufficiently cleaned, the pivotable nozzles may be pivoted to the second position, i.e. directed towards the hoofs of the animal. The pivoting may preferably be made slow to allow the whole lower leg of the animal to be completely cleaned during pivoting. The pivoting may be made using a mechanical actuator such as a pneumatic drive or an electrical drive. Alternatively the pivotable nozzles may be pivoted manually by operating a lever or the like. The pivotable nozzles should produce a fluid jet having a pressure force large enough to remove substantially all debris from the hoof and lower leg of the animal. At the same time the fluid jet should have an effective spray area large enough to cover the width of the leg and hoof of the animal and allowing the animal to move slightly or misalign within the enclosure. The distance between the front legs and rear legs and the height of the leg will differ within a species. To treat all animals within a species having different size by using the same cleaning station, a large spray area is required. The cleaning fluid is preferably a liquid; however some embodiments may use a gas such as compressed air.

After the animal has been positioned within the enclosure, the entrance gate and the exit gate should be closed sufficiently to prevent the animal from escaping. Preferably not more than one gate is open at a time. When the entrance gate is open, a single animal may be lead inside the enclosure. When the animal is correctly positioned inside the enclosure, the entrance gate may be closed and subsequently the cleaning process may start. After the cleaning process has finished, the exit gate may be opened and the animal may leave the enclosure.

Preferably, the exit gate is closed before opening the entrance gate and allowing the next animal to enter the enclosure.

The cleaning station is preferably positioned between the cattle yard and the milking booth. Before being milked, the cattle may pass one by one through the cleaning station to arrive for milking in a cleaned state. Several cleaning station may be provided in parallel to allow a higher throughput.

It is contemplated that a control system may be used to automatically detect the presence of an animal and open and close the gates as well as start and stop the cleaning procedure accordingly. More advanced cleaning stations may include a video camera for automatically detecting debris on the hoof and leg of the animal and control the pivoting and the set of nozzles accordingly.

In a further embodiment according to the present invention said entrance gate and said exit gate of said enclosure are located opposite each other and said enclosure further comprise two parallel sidewalls connecting said entrance and exit gates. By positioning the entrance and exit gates opposite each other, the animal is not required to reorient itself during cleaning. This will reduce the time needed before and after cleaning when the animal enters and leaves the enclosure. The parallel side walls will help to keep the animal in position during cleaning.

In a further embodiment according to the present invention said set of pivotable nozzles is mounted at a height substantially equal to the height of said knee. By mounting the set of pivotable nozzles at a height corresponding to the height of the knee of the animal, the hoof and lower leg of the animal may be cleaned by a downwards directed fluid jet of cleaning fluid. A downwards directed fluid jet will cause the debris removed from the animal to be directed downwards as well. By directing the debris downwards, the debris will reach the horizontal surface quickly. Horizontal or upwards facing fluid jets may cause removed debris to continue in an upwards direction and reattach to the animal at a higher located body part.

In a further embodiment according to the present invention said nozzles have a rectangular fluid outlet providing a broad flow jet. A broad flow jet is understood to mean that the flow jet should have an effective spray area larger than the leg of the animal. This will allow for larger variations of the size and position of the animal. A broad flow jet may e.g. produce a quadratic spray area due to the pivoting of the pivotable nozzles. The spray area is understood to mean the area where the animal may position its legs and still receive cleaning fluid in a quantity and at a pressure force sufficient for removing debris efficiently.

In a further embodiment according to the present invention said set of pivotable nozzles comprises:
a rear nozzle for applying said cleaning fluid to said pair of rear legs,
a front nozzle for applying said cleaning fluid to said pair of front legs, and
a pair of side nozzles located on opposite sides of said enclosure for applying said cleaning fluid to said pair of front and rear legs.

For an efficient cleaning of the animal, each leg and hoof may be cleaned from a plurality of directions. By cleaning the leg and hoof from the front, sides and rear the complete surface of the hoof and leg will be cleaned.

In a further embodiment according to the present invention, an additional pair of side nozzles located on opposite sides of said enclosure are provided for applying said cleaning fluid to said pair of front and rear legs. Since the front leg and rear legs may be located a large distance apart, it may be advantageous to provide a separate pair of pivotable nozzles in order to have a first and second pair of pivotable nozzles for the rear and front legs, respectively.

In a further embodiment according to the present invention said cleaning station additionally includes a set of fixed nozzles for applying cleaning fluid to the hoofs of said pair of rear legs. It has been shown that the rear hoofs of the animals are more affected by debris than other parts of the animal. Therefore an additional set of nozzles exclusively directed towards the rear hoofs may be used. Additionally, the set of fixed nozzles may serve the purpose of clearing the horizontal surface so that the debris removed from the animal is quickly disposed of outside the enclosure.

In a further embodiment according to the present invention said cleaning fluid comprises a flushing fluid, preferably tap water. The cleaning fluid should be suitable for flushing the hoofs and legs of the animal. Providing a large amount of flushing fluid will aid the removal of all debris, since sometimes the animal is covered with relative large amounts of debris. Preferably a cheap and non-toxic fluid such as tap water is used due to the large amount of fluid required.

In a further embodiment according to the present invention said cleaning fluid comprises a disinfection fluid. A disinfection fluid may be used to remove bacteria from the hoof and leg of the animal. The disinfection fluid is preferably non-toxic and biologically degradable so as to not affect the natural environment of the animals.

In a further embodiment according to the present invention said cleaning fluid comprises both a disinfection fluid and a flushing fluid and said cleaning fluid supply system further includes a valve for alternating between providing said disinfection fluid and said flushing fluid to said set of pivotable nozzles. Preferably first the flushing fluid is applied to remove any debris from the legs and hoofs of the animal. When the debris has been removed and the hoof and leg of the animal is visually clean, the valve is operated and disinfection fluid may be applied to remove bacteria which may not be visible. Preferably the same set of pivotable nozzles are used for both the flushing fluid and the disinfection fluid, alternatively separate nozzles may be used.

In a further embodiment according to the present invention said disinfection fluid comprises a mixture of a disinfectant and a biologically degradable oil such as vegetable oil. A disinfectant may comprise e.g. an alcohol for effectively removing bacteria from the hoof and leg. The oil serves to prevent further contamination by making the hoofs slippery. When the animal returns to the cattle yard, debris will not adhere to the hoof and leg of the animal as quickly as without any treatment with oil. Vegetable oil is preferably used since it does not negatively affect the environment.

In a further embodiment according to the present invention said fluid supply system includes a pump. A pump may be used to ensure a high pressure in the nozzles and in the fluid supply system.

In a further embodiment according to the present invention a first actuator pivots said pivotable nozzles between said first and second positions. A first actuator, such as an electrical motor or a pneumatic device, may be used to pivot the pivotable nozzles. The first actuator may be controlled by a control system, where the position may be changed automatically. Alternatively, the position may be controlled manually by an operator. Each nozzle may have a separate actuator or one actuator may pivot all nozzles via a mechanical system. Preferably, all nozzles pivot simultaneously.

In a further embodiment according to the present invention a second and third actuator opens and closes said entrance and exit gates, respectively. The gates are preferably opened and closed automatically by two separate actuators. The second and third actuators may be controlled by a control system.

The above need and the above objects together with numerous other needs and objects, which will be evident from the below detailed description, are, according to a second aspect of the present invention, obtained by a cleaning station for cleaning a cloven-hoofed animal, said cloven-hoofed animal having a body defining a body length and a body width, said cloven-hoofed animal having four legs constituting a pair of rear legs and a pair of front legs, each leg having a hoof and a knee, said cleaning station comprising:
an enclosure located on a horizontal surface, said enclosure having an entrance gate and an exit gate, said enclosure defining an interior length and an interior width corresponding to said body length and said body width, said enclosure defining a height at least equal to the height of said leg to position said cloven-hoofed animal inside said enclosure and to prevent any substantial movement of said cloven-hoofed animal by closing said entrance and exit gates,
a set of pivotable nozzles mounted on said enclosure and being pivotable between a first position and a second position, said first position defining a nozzle direction towards said knee for propelling cleaning fluid against said knee and said leg of said cloven-hoofed animal and a second position defining a nozzle direction towards said hoof for propelling cleaning fluid against said hoof of said cloven-hoofed animal, and
a fluid supply system for transporting a cleaning fluid from a cleaning fluid supply to said set of pivotable nozzles.

It is contemplated that the cleaning station according to the second aspect of the present invention may be used in combination with the methods and embodiments according to the second aspect of the present invention. Although in the above description the animal has been described as a cloven-hoofed animal, it may be contemplated that the method according the first aspect of the present invention and the cleaning station according the second aspect of the present invention may also be used for other animals, such as horses, dogs etc.

The present invention will now be further described with reference to the figures, in which:
Fig. 1 a-b is a perspective view of a hoof treatment station for cattle according to the present invention,
Fig. 2a-c shows the steps of introducing, positioning and removing a cow from the hoof treatment station of fig. 1, and
Fig. 3a-d is a close-up view of a pivotable nozzle of the hoof treatment station of fig. 1, where the pivotable nozzle is shown in the first (a,c) and second (b,d) position, respectively.

A detailed description of the figures of a presently preferred embodiment according to the present invention follows below:

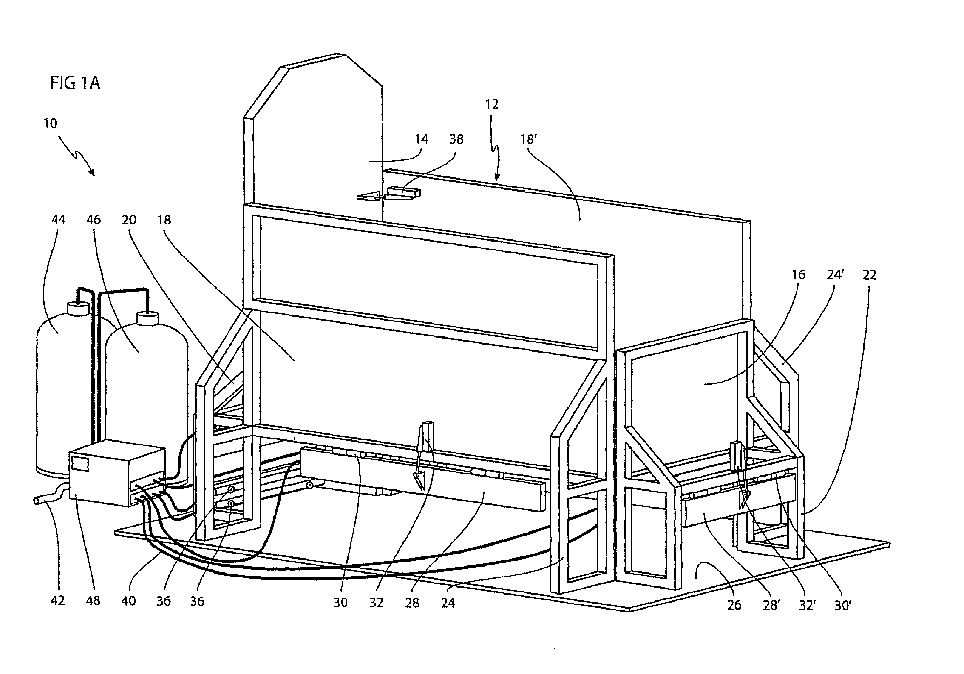

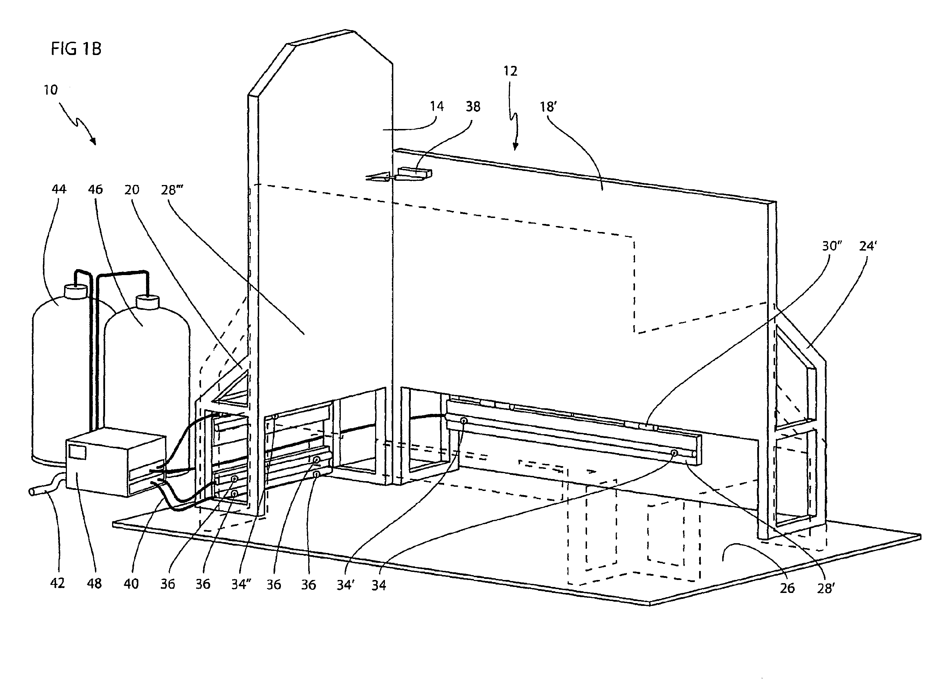

Figure 1 a shows a hoof treatment station 10 for cattle comprising an enclosure 12. The enclosure 12 has an entrance gate 14 and an opposite exit gate 16. The enclosure further comprises two side walls 18, 18' which interconnect the entrance gate 14 and the exit gate 16. The side walls 18, 18' as well as the entrance gate 14 and the exit gate 16 are made high enough to avoid the cow escaping the enclosure. The exact measurements of the enclosure will vary according to the specific species and breed of the cow. It is contemplated that the height should at least be equal to the leg height of the cow. The enclosure 12 is preferably made of wood, however any other similar panel material may be used, such as e.g. metal. The enclosure should be made thick enough to provide a safe enclosure for the cow, e.g. it should be able to support at least part of the weight of the cow since the cow may possibly lean against the enclosure in some situations. When the cow is positioned within the enclosure 12 and the leg and hoof treatment starts, the cow may possibly be intimidated by the cleaning process. The enclosure should therefore be made thick and rigid enough to be able to withstand any actions performed by the cow, such as kicks or butts. The entrance gate 14, which will be close to the rear legs of the cow, is slightly higher to protect persons or animals from possible rearward kicks by the cow. The exit gate 16, which is located near the head of the cow, is preferably slightly lower to allow the head of the cow to reach outside the enclosure. By allowing the cow to observe the surroundings of the enclosure 12, the cow typically remains calmer and is less intimidated and less likely to be aggressive.

The enclosure 12 is held up by four frames constituting an entrance frame 20, an exit frame 22 and two side frames 24, 24'. The frames 20, 22, 24, 24' are made stable enough to be able to support the weight of the cow and prevent the enclosure 12 from collapsing if the cow should lean against any of the side walls 18, 18'. The frames 20, 22, 24, 24' extend a suitable distance outwards in relation to the enclosure 12 to provide additional stability. The enclosure 12 is positioned on a substantially flat and solid floor 26. The floor 26 is preferably made of either wood or concrete to allow a large number of cattle to walk on the floor 26 without any significant wear. The floor 26 should be simple to clean of any debris which may accumulate from the cows.

The enclosure 12 does not reach the floor to allow for four pivotable nozzle holders 28, 28', 28",28"' to be mounted under the enclosure 12 , i.e. under the side walls 18, 18', the entrance gate 14 and the exit gate 16. (In the perspective view of fig. 1a, the pivotable nozzle holders 28" and 28''' are not visible) The side frame 24 has the pivotable nozzle holder 28 mounted under the side walls 18. The pivotable nozzle holder 28 is pivotably mounted to the frame 24 by means of a hinge 30. The pivotable nozzle holder 28 is mounted to the side frame 24 at a height corresponding to the height of the knee of the cow. The pivotable nozzle holder 28 is pivotable by the use of a nozzle actuator 32. The nozzle actuator 32 interconnects the pivotable nozzle holder 28 and the frame 24. The nozzle actuator 32 is preferably a remote controlled electromechanical actuator driven by a low voltage AC source, however, alternatively -pneumatic actuators or any other type of actuators may be used. Such actuators are well known in the art. The actuator may be controlled by a control unit, which is not shown. The exit frame 22 has the pivotable nozzle holder 28' mounted under the entrance gate 16. The pivotable nozzle holder 28' is pivotable by a hinge 30' and a nozzle actuator 32' in a similar way as described above in relation to the pivotable nozzle holder 28. The entrance frame has a set of fixed nozzles 36 mounted near the floor, which will be described in detail later.

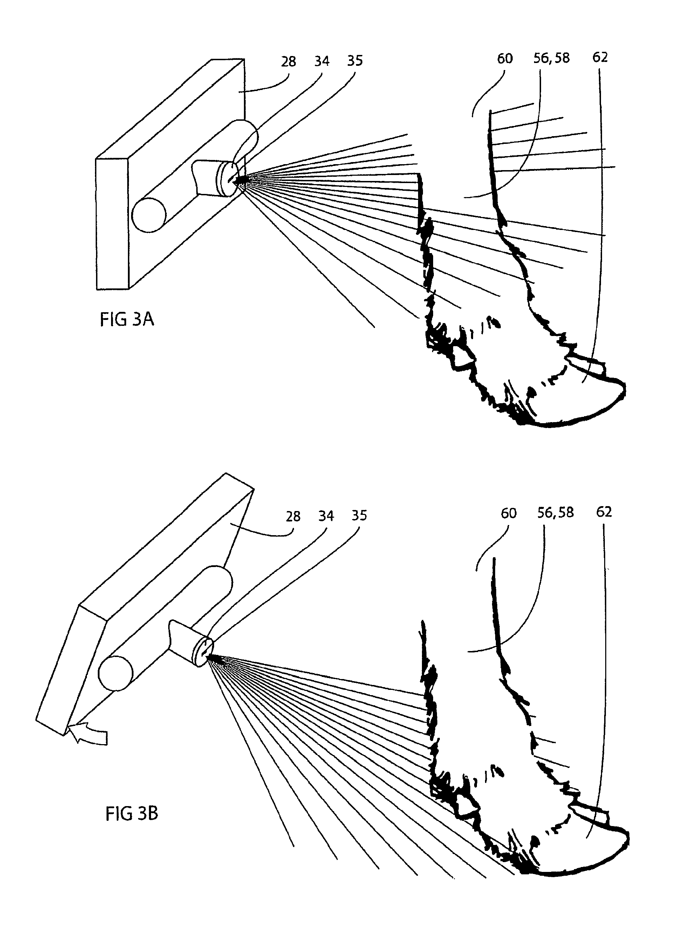

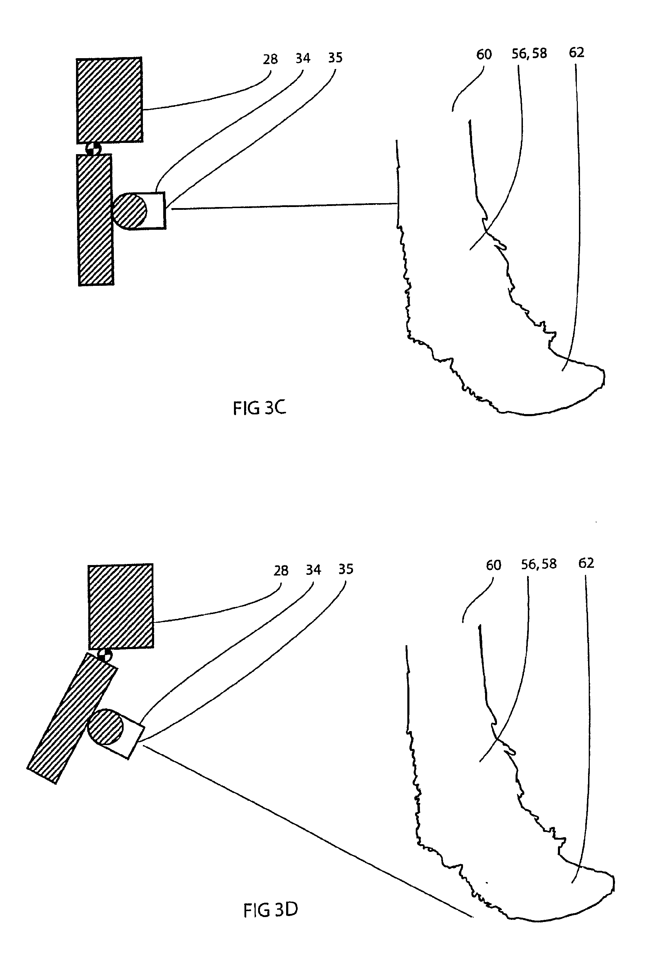

Each pivotable nozzle holder 28, 28', 28", 28''' has one or two inwards oriented nozzles 34 attached, which are not visible in fig. 1a but will be described in fig. 1b and 3. The nozzles 34 are supplied with a cleaning fluid through a pipe system 40. The cleaning fluid constitutes either tap water or disinfection fluid. The pipe system 40 is consequently supplied either with tap water from a water supply 42 or with a disinfection fluid. The disinfection fluid is a combination of a disinfectant and a vegetable oil. The disinfectant may be any alcohol, such as ethanol or methanol or the like. The disinfectant may also be an iodine solution, or a mixture of the above. The presently preferred mixture comprises 10%-25% alcohol, 2.5% phosphoric acid and 2.5% iodine. The vegetable oil should preferably be biologically degradable so as to not contaminate the cattle yard. Suitable vegetable oils include corn oil. The disinfectant and the vegetable oil are supplied to the pipe system 40 from a disinfectant container 44 and a vegetable oil container 46, respectively. A valve and pump system 48 is located between the water supply 42, the disinfectant container 44 and the vegetable oil container and the pipe system 40. The valve and pump system is used to change between tap water and disinfection fluid and to pressurise the cleaning fluid, which is either tap water or disinfection fluid. The tap water is used to rinse and remove dirt and debris from the hoofs and legs of the cow. The disinfection fluid includes both the disinfectant and the vegetable oil. The ratio between the disinfectant and the vegetable oil in the disinfection fluid is controlled by the valve and pump system 48. The presently preferred ratio is 2/3 disinfectant and 1/3 vegetable oil. The disinfectant is supplied after the tap water to remove any bacteria remaining on the hoofs and the legs of the cow. The vegetable oil is supplied together with the disinfectant to the hoofs and legs of the cow to make the hoofs and legs of the cow slippery and thereby prevent further dirt and debris from accumulating on the legs and hoofs of the cow for a period of time. It is important that both the disinfectant and the vegetable oil are biologically degradable and non-toxic to avoid contamination of the environment surrounding the hoof treatment station 10.

Figure 1b shows a perspective cross-sectional view of the hoof treatment station 10 of figure 1a where the frame 22 and 24 and all the corresponding parts have been dashed to visualize the interior of the enclosure 12 and the hoof cleaning station 10. The pivotable nozzle holder 28" has two attached nozzles 34, 34' oriented towards the interior of the casing, i.e. towards the legs of the cow. The nozzle 34 is oriented towards the front legs of the cow and the nozzle 34' is oriented towards the rear legs of the cow. The entrance frame 20 has a pivotable nozzle holder 28"' and a corresponding nozzle 34" oriented towards the rear legs of the cow. The entrance frame 20 has additionally a set of fixed nozzles 36 oriented towards the rear legs of the cow. The rear legs and hoofs typically accumulate more debris than the front legs and hoofs, therefore additional cleaning of the rear legs and hoofs is necessary. The set of fixed nozzles 36 additionally clean the floor 26 to ensure that debris removed from the cow which lands on the floor 26 is flushed to the outside of the hoof cleaning station 10. The used cleaning fluid may flow out under the enclosure 12. The pivotable nozzle holders 28 28' have corresponding nozzles which are not shown in the present perspective view.

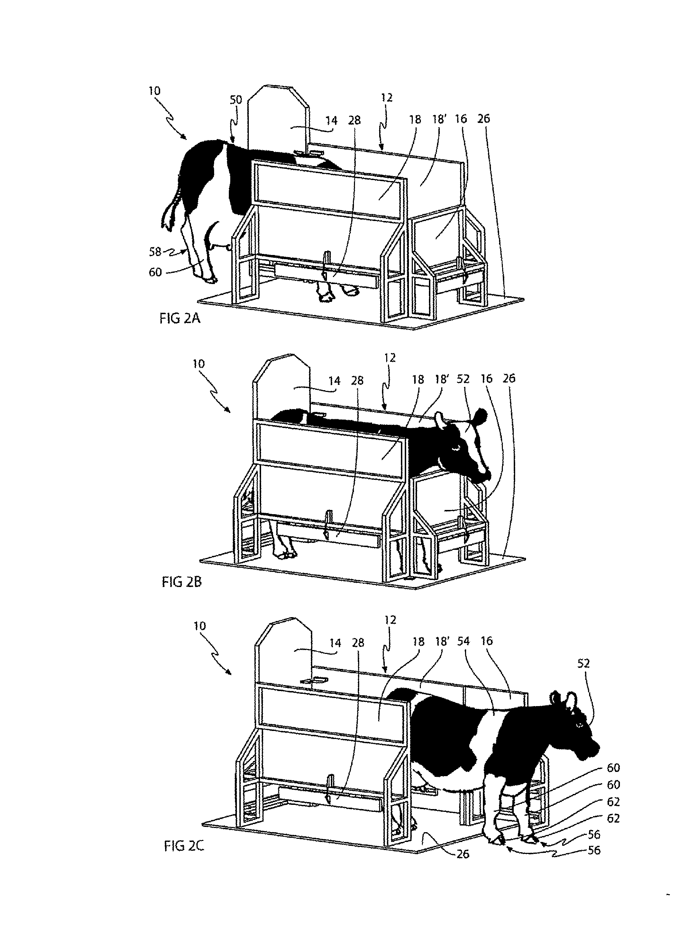

Fig. 2a-2c show the steps of introducing, positioning and removing a cow 50 from the hoof treatment station of fig 1. Fig. 2a-c also shows the anatomic parts of the cow 50 which are relevant to the present description. The relevant anatomic parts are the head 52, the body 54, the front legs 56, the rear legs 58, the knees 60 and the cloven hoofs 62.

Fig. 2a shows a cow 50 when entering the hoof treatment station 10 of fig 1. The entrance gate 14 has been opened by operating the entrance gate opener so that a single cow may enter the hoof treatment station 10 through the entrance gate 14. The exit gate 16 is closed to avoid the cow from passing through the hoof treatment station 10 without treatment.

Fig. 2b shows a cow positioned within the hoof treatment station 10 where the body of the cow 50 is completely surrounded by the enclosure 12 and the head of the cow 50 is allowed to reach outside the enclosure 12. Both the entrance gate 14 and the exit gate 16 are closed and the treatment may start.

Fig 2c shows a cow 50 leaving the hoof treatment station 10. The cow leaves the enclosure 12 after the exit gate 16 has been opened by operating the exit gate opener. When the cow 50 has left the hoof treatment station 10 the exit gate 16 may be closed. Subsequently the entrance gate14 may be opened to allow for a further cow 50 to enter the hoof treatment station 10 through the entrance gate 14, as shown in fig. 2a.

Fig. 3a and 3b show a close-up of the pivotable nozzle 34" mounted on the pivotable nozzle holder 28''' of the hoof cleaning station 10 of fig 1 and 2. The straight lines illustrate the flow lines of the spray jet of cleaning fluid from the outlet end of the nozzle 34" towards the rear leg 58 of the cow 50.

Fig 3a shows the pivotable nozzle holder 28''' in a first position where the pivotable nozzle 34" is directing a cleaning fluid spray jet in a substantially horizontal direction, i.e. towards the lower leg of the cow 50. The cleaning fluid spray jet is broad in the horizontal dimension but narrow in the vertical dimension. The broadness of the cleaning fluid spray jet is achieved by the using a rectangular shaped outlet end 35 of the nozzle 34. The broad cleaning fluid spray jet will thus clean a narrow area on the lower leg 56, 58 of the cow 50. Slight horizontal movements of the lower leg 56, 58, as will be permitted when the cow is positioned within the enclosure 12, will still allow for the cleaning fluid spray jet to reach the same area of the cow 50, i.e. the lower leg 56, 58. Some cleaning fluid not reaching the rear legs of the cow may proceed to reach the front legs of the cow.

Fig. 3b shows the pivotable nozzle holder 28"' in a second position where the pivotable nozzle 34" is directing a cleaning fluid spray jet of cleaning fluid in a downwards direction. The arrow in the figure represents the pivoting direction. The cleaning fluid spray jet is broad in the horizontal dimension but narrow in the vertical dimension. The broad flow jet will thus clean the hoof 62 of the cow 50. Slight horizontal movements of the hoof 62, as permitted when the cow 50 is positioned within the enclosure 12, will still allow for the flow jet to reach the hoof 62 of the cow 50.

Fig. 3a and 3b show the working principle of the pivotable nozzle holder 28" mounted on the entrance frame 20 of the hoof cleaning station 10. It is however evident from the above description that the pivotable nozzle holders 28, 28', 28", mounted on the side and front frame 24, 24', 24", respectively, work in a similar fashion for treating the legs and the hoofs.

Normally, tap water is supplied initially to rinse both the legs and the hoofs of the cow. Afterwards disinfection fluid comprising disinfectant and vegetable oil is supplied to prevent infections and prevent further debris from adhering to the legs and hoofs of the cow.

In some variant of the above hoof cleaning station the used cleaning fluid may be collected, cleaned and re-used.

Fig 3c shows a cross-section of the pivotable nozzle holder 28''' of fig. The pivotable nozzle 34" is in a first position where the pivotable nozzle 34" is directing a cleaning fluid spray jet in a substantially horizontal direction, i.e. towards the lower leg of the cow 50.

Fig 3d shows a cross-section of the pivotable nozzle holder 28''' of fig. 3b. The pivotable nozzle 34" is directing a cleaning fluid spray jet of cleaning fluid in a downwards direction, i.e. towards the hoof 62 of the cow 50.

### List of items with reference to the figures:

10. Hoof treatment station
12. Enclosure
14. Entrance gate
16. Exit gate
18 18'. Side wall
20. Entrance frame
22. Exit frame
24 24'. Side frame
26. Floor
28. Pivotable nozzle holders
30. Nozzle hinge
32. Nozzle actuator
34. Nozzle
35. Nozzle outlet
36. Fixed nozzle
38. Gate opener
40. Pipe system
42. Water supply
44. Disinfectant container
46. Vegetable oil container
48. Valve and pump system

### List of anatomic parts of the cow with reference to the figures:

50. Cow
52. Head
54. Body
56. Front leg
58. Rear leg
60. Knee
62. Cloven hoof

## Claims

1. A method of cleaning a cloven-hoofed animal, said cloven-hoofed animal having a body defining a body length and a body width, said cloven-hoofed animal having four legs constituting a pair of rear legs and a pair of front legs, each leg having a hoof and a knee, said method comprises providing a cleaning station, said cleaning station comprising:
an enclosure located on a horizontal surface, said enclosure having an entrance gate and an exit gate, said enclosure defining an interior length and an interior width corresponding to said body length and said body width, said enclosure defining a height at least equal to the height of said leg,
a set of pivotable nozzles mounted on said enclosure and being pivotable between a first position and a second position, said first position defining a nozzle direction towards said knee and said second position defining a nozzle direction towards said hoof, and
a fluid supply system for transporting a cleaning fluid from a cleaning fluid supply to said set of pivotable nozzles, said method including the steps of:
causing said cloven-hoofed animal to be positioned inside said enclosure and closing said entrance and exit gates to prevent any substantial movement of said cloven-hoofed animal,
positioning said set of pivotable nozzles in said first position and propelling cleaning fluid against said knee and said leg of said cloven-hoofed animal by using said set of pivotable nozzles and said fluid supply system,
positioning said set of pivotable nozzles in said second position and propelling cleaning fluid against said hoof of said cloven-hoofed animal by using said set of pivotable nozzles and said fluid supply system, and
opening said exit gate and causing said cloven-hoofed animal to leave said enclosure.

2. The method according to claim 1, wherein said entrance gate and said exit gate of said enclosure are located opposite each other and said enclosure further comprising two parallel sidewalls connecting said entrance and exit gates.

3. The method according to any of the preceding claims, wherein said set of pivotable nozzles is mounted at a height substantially equal to the height of said knee.

4. The method according to any of the preceding claims, wherein said nozzles have a rectangular fluid outlet for providing a broad flow jet.

5. The method according to any of the preceding claims, wherein said set of pivotable nozzles comprise:
a rear nozzle for applying said cleaning fluid towards said pair of rear legs,
a front nozzle for applying said cleaning fluid towards said pair of front legs, and
a pair of side nozzles located on opposite sides of said enclosure for applying said cleaning fluid towards said pair of front and rear legs.

6. The method according to claim 5, further providing an additional pair of side nozzles located on opposite sides of said enclosure for applying said cleaning fluid towards said pair of front and rear legs.

7. The method according to any of the preceding claims, wherein said cleaning station additionally includes a set of fixed nozzles for applying cleaning fluid towards the hoofs of said pair of rear legs.

8. The method according to any of the preceding claims, wherein said cleaning fluid comprises a flushing fluid, preferably tap water.

9. The method according to any of the claims 1-7, wherein said cleaning fluid comprises a disinfection fluid.

10. The method according to any of the claims 1-7, wherein said cleaning fluid comprises both a disinfection fluid and a flushing fluid and said cleaning fluid supply system further includes a valve for alternating between providing said disinfection fluid and said flushing fluid to said set of pivotable nozzles.

11. The method according to any of the claims 9-10, wherein said disinfection fluid comprises a mixture between a disinfectant and a biologically degradable oil such as vegetable oil.

12. The method according to any of the preceding claims, wherein said fluid supply system includes a pump.

13. The method according to any of the preceding claims, wherein a first actuator pivots said pivotable nozzles between said first and second positions.

14. The method according to any of the preceding claims, wherein a second and third actuator opens and closes said entrance and exit gates, respectively.

15. A cleaning station for cleaning a cloven-hoofed animal, said cloven-hoofed animal having a body defining a body length and a body width, said cloven-hoofed animal having four legs constituting a pair of rear legs and a pair of front legs, each leg having a hoof and a knee, said cleaning station comprising:
an enclosure located on a horizontal surface, said enclosure having an entrance gate and an exit gate, said enclosure defining an interior length and an interior width corresponding to said body length and said body width, said enclosure defining a height at least equal to the height of said leg for positioning said cloven-hoofed animal inside said enclosure and to prevent any substantial movement of said cloven-hoofed animal by closing said entrance and exit gates,
a set of pivotable nozzles mounted on said enclosure and being pivotable between a first position and a second position, said first position defining a nozzle direction towards said knee for propelling cleaning fluid against said knee and said leg of said cloven-hoofed animal and a second position defining a nozzle direction towards said hoof for propelling cleaning fluid against said hoof of said cloven-hoofed animal, and
a fluid supply system for transporting a cleaning fluid from a cleaning fluid supply to said set of pivotable nozzles.
